# EUROPEAN PATENT APPLICATION

(11) **EP 3 873 043 A1**
(43) Date of publication of application: **01.09.2021**
(21) Application number: 20772194.5
(22) Date of filing: 12.02.2020
(51) Int. Cl.: H04L 12/803, H04L 12/819, H04L 29/08, H04L 29/06

(54) **LOAD BALANCING METHOD, DEVICE AND SYSTEM**

(30) Priority: 30.12.2019 CN 201911390565
(71) Applicant: Wangsu Science & Technology Co., Ltd., Shanghai 200030 (CN)
(72) Inventor: ZHUANG, Yudong, Shanghai 200030 (CN); ZHENG, Binbin, Shanghai 200030 (CN)
(74) Representative: Vinsome, Rex Martin
(86) International application number: PCT/CN2020/074951
(87) International publication number: WO 2021/134860

(57) **Abstract**

The embodiments of the present disclosure relate to the field of computer technologies, and provide a load balancing method, device and system. The load balancing method includes: in response to a first connection establishing message that is configured to establish a main connection of a MPTCP session and is sent by a client device via a first network interface, generating first token information of the main connection according to the first connection establishing message (101); sending the first connection establishing message to a server device, and adding a corresponding relation between the first token information and the server device receiving the first connection establishing message into a preset first connection forwarding table (102); and in response to a second connection establishing message that is configured to establish a sub-connection of the MPTCP session and is sent by the client device via a second network interface, and according to a second token information in the second connection establishing message and the first connection forwarding table, sending the second connection establishing message to the server device corresponding to the second token information, the second token information is the first token information of the main connection to which the sub-connection belongs (103). In the present application, load balancing based on a MPTCP protocol is implemented.

## Description

### CROSS REFERENCE TO RELATED APPLICATIONS

The present disclosure claims priority to Chinese Patent Application No. 201911390565.4, titled "Load Balancing Method, Device and System", filed December 30, 2019, which is incorporated herein by reference in its entirety.

### TECHNICAL FIELD

The embodiments of the present disclosure relate to the field of computer technologies, and more particularly, to a load balancing method, device and system.

### BACKGROUND

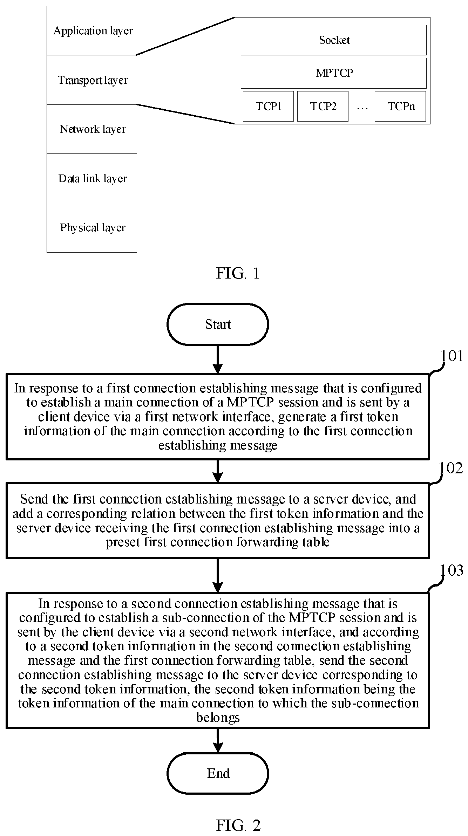

Multi Path Transmission Control Protocol (MPTCP) is a communication protocol that achieves simultaneous and concurrent transmission via multiple paths, which can make full use of network resources and improve a network utilization rate. For a client device having multiple network interfaces (such as 4G network interface and WIFI network interface), a MPTCP session established between the client device and a server device includes a main connection and at least one sub-connection. In other words, one TCP connection in the MPTCP protocol contains multiple paths. Please refer to FIG. 1, which is a schematic diagram showing a working level of MPTCP in a TCP/IP protocol stack. The MPTCP protocol works at the fourth layer of the TCP/IP protocol, i.e. the MPTCP protocol is added between the original TCP protocol stack and a socket interface of the application layer. The MPTCP protocol is completely transparent to the application layer, and the application layer does not need to make any changes when using the MPTCP protocol.

Load balancing is a cluster technology capable of providing high availability and high performance, can expand bandwidths of a network device and a server, increase a bandwidth throughput of a service cluster, and enhance a processing capability of the service cluster on network data. A load balancer may distribute businesses with respect to different network services to multiple servers in the service cluster, thus improving the business processing capability of the entire service cluster and ensuring high availability of the business.

However, it has been founded by the inventors that the existing technology at least has the following problems: the above-mentioned load balancing technology cannot be applied in the existing MPTCP protocol.

### SUMMARY

Embodiments of the present disclosure are intended to provide a load balancing method, device and system, to ensure effectiveness of a MPTCP mechanism based on performing load balancing, thereby implementing load balancing based on a MPTCP protocol.

In order to solve the foregoing technical problems, the embodiments of the present disclosure provide a load balancing method applied to a load balancing device, including: in response to a first connection establishing message that is configured to establish a main connection of a MPTCP session and is sent by a client device via a first network interface, generating a first token information of the main connection of the MPTCP session according to the first connection establishing message; sending the first connection establishing message to a server device, and adding a corresponding relation between the first token information and the server device receiving the first connection establishing message into a preset first connection forwarding table; and in response to a second connection establishing message that is configured to establish a sub-connection of the MPTCP session and is sent by the client device via a second network interface, and according to a second token information in the second connection establishing message and the first connection forwarding table, sending the second connection establishing message to the server device corresponding to the second token information. Herein the second token information is first token information of the main connection to which the sub-connection belongs.

The embodiments of the present disclosure further provide a load balancing device, including at least one processor; and, a memory communicated with the at least one processor. Herein the memory stores an instruction executable by the at least one processor, and the instruction is executed by the at least one processor to cause the at least one processor to implement the load balancing method mentioned above.

The embodiments of the present disclosure further provide a load balancing system, including a load balancing device, at least one client device and at least one server device that are mutually connected. The client device is configured to send a first connection establishing message for establishing a main connection of a MPTCP session to the load balancing device via a first network interface. The load balancing device is configured to obtain a first token information of the main connection according to the first connection establishing message. The load balancing device is further configured to send the first connection establishing message to the server device, and add a corresponding relation between the first token information and the server device into a preset first connection forwarding table. The client device is further configured to send a second connection establishing message for establishing a sub-connection of the MPTCP session to the load balancing device via a second network interface. Herein, the second connection establishing message includes a second token information, and the second token information is the first token information of the main connection to which the sub-connection belongs. The load balancing device is further configured to send the second connection establishing message to the server device corresponding to the second token information according to the second token information and the first connection forwarding table.

Comparing with the existing technology, in the embodiments of the present disclosure, the load balancing device generates the first token information of the main connection according to the first connection establishing message after receiving the first connection establishing message that is configured to establish the main connection of the MPTCP session and is sent by the client device via the first network interface, and adds the corresponding relation between the first token information and the server device receiving the first connection establishing message into the preset first connection forwarding table, i.e., records the corresponding relation between the token information of the main connection and the server device providing services for the main connection, when forwarding the first connection establishing message to the server device. After receiving the second connection establishing message that is configured to establish the sub-connection of the MPTCP session and is sent by the client device via the second network interface, the load balancing device may obtain the server device corresponding to the second token information in the second connection establishing message by querying the first connection forwarding table, and the second token information is the token information of the main connection of the MPTCP session to which the sub-connection belongs. In this way, the connection establishing message of the main connection and the connection establishing message of the sub-connection belonging to the same MPTCP session may be sent to the same server device, so that the MPTCP connection access is successfully established. Therefore, based on performing load balancing, the effectiveness of the MPTCP mechanism is ensured thereby implementing load balancing based on the MPTCP protocol, without changing the client device.

In an embodiment, generating the first token information of the main connection according to the first connection establishing message includes: obtaining key information of the server device by calculating according to the first connection establishing message; and obtaining the first token information by calculating according to the key information. The embodiment provides a concrete implementation manner of generating the first token information of the main connection according to the first connection establishing message.

In an embodiment, sending the first connection establishing message to the server device includes: adding the key information into the first connection establishing message, and sending the first connection establishing message added with the key information to the server device, for the server device to establish a corresponding relation between the key information and the MPTCP session to which the main connection belongs. In the embodiment, the first connection establishing message added with the key information is sent to the server device, so that the server device can establish the corresponding relation between the key information and the MPTCP session to which the main connection belongs, thus avoiding confusion among multiple MPTCP sessions in the server device.

In an embodiment, the first connection establishing message includes a quintuple information of the main connection. After sending the first connection establishing message to the server device, the method further includes: adding a corresponding relation between the quintuple information of the main connection and the server device into a preset second connection forwarding table. The method further includes: in response to a data message that includes the quintuple information and is sent by the client device based on the main connection, and according to the quintuple information in the data message and the second connection forwarding table, sending the data message to the server device corresponding to the quintuple information in the data message. In the embodiment, when the client device can transmit data with the server device based on the main connection of the MPTCP session, the data message can be forwarded according to the corresponding relation between the quintuple information and the server device in the second connection forwarding table.

In an embodiment, the second connection establishing message includes a quintuple information of the sub-connection. After sending the second connection establishing message to the server device corresponding to the second token information according to the second token information in the second connection establishing message and the first connection forwarding table, the method further includes: adding a corresponding relation between the quintuple information of the sub-connection and the server device into a preset third connection forwarding table. The method further includes: in response to a data message that includes the quintuple information and is sent by the client device based on the sub-connection, and according to the quintuple information in the data message and the third connection forwarding table, sending the data message to the server device corresponding to the quintuple information in the data message. In the embodiment, when the client device can transmit data with the server device based on the sub-connection of the MPTCP session, the data message can be forwarded according to the corresponding relation between the quintuple information and the server device in the third connection forwarding table.

In an embodiment, the first connection establishing message includes a quintuple information of the main connection. Obtaining the key information by calculating according to the first connection establishing message includes: obtaining the key information by calculating according to the quintuple information of the main connection. The embodiment provides a concrete implementation manner of obtaining the key information by calculating according to the first connection establishing message.

### BRIEF DESCRIPTION OF THE DRAWINGS

One or more embodiments are illustrated by way of examples through the figures in the corresponding accompanying drawings, which are not to be construed as limiting the embodiments. Elements having the same reference numerals in the accompanying drawings are denoted as similar elements. Unless otherwise stated, the figures in the accompanying drawings are not to be construed as limiting the scale.
FIG. 1 is a schematic diagram showing a working level of a known MPTCP in a TCP/IP protocol stack;
FIG. 2 is a specific flow chart of a load balancing method according to a first embodiment of the present disclosure;
FIG. 3 is an interactive diagram of establishing a MPTCP connection according to the first embodiment of the present disclosure;
FIG. 4 is a specific flow chart of a load balancing method according to a second embodiment of the present disclosure;
FIG. 5 is an interactive diagram of establishing a MPTCP connection according to the second embodiment of the present disclosure; and
FIG. 6 is a block diagram of a load balancing system according to a fourth embodiment of the present disclosure.

### DETAILED DESCRIPTION

To make the objectives, technical solutions, and advantages of the embodiments of the present disclosure clearer, the embodiments of the present disclosure will be elaborated in detail hereinafter with reference to the accompanying drawings. However, those of ordinary skills in the art may understand that many technical details are provided in each embodiment of the present disclosure such that readers can better understand the present disclosure. However, the technical solutions sought to be protected by the present disclosure can also be achieved even without these technical details and various changes and modifications based on the following embodiments.

In the known load balancing technology, a load balancing device may forward TCP connection data packets according to quintuple information (source IP, source port, destination IP, destination port, and transmission protocol) of a TCP connection, so as to ensure that data packets of the same TCP connection will be forwarded to a same server by the load balancing device. However, for multi path simultaneous and concurrent transmission protocol such as MPTCP, one TCP connection of an MPTCP session includes multiple connections, and quintuple information of different connections is different. Therefore, for a load balancing device, if the load balancing device still forwards data packets according to the quintuple information, connections belonging to the same MPTCP session will be forwarded to different servers, which will lead to failure of connection between a client device and a server device, and make the MPTCP protocol invalid. Based on this, the inventors propose the technical solutions of the present disclosure.

A first embodiment of the present disclosure relates to a load balancing method, which is applied to a load balancing device and can implement load balancing based on a MPTCP protocol. The load balancing device is respectively connected to at least one client device and at least one server device. For example, the client device may be a mobile phone, a tablet, or the like, and may include multiple network interfaces. The network interface, for instance, may be a 4G network interface, a WIFI network interface, etc. The multiple network interfaces include a first network interface and at least one second network interface. For example, if the client device includes a 4G network interface and a WIFI network interface, then the 4G network interface may be used as the first network interface and the WIFI network interface may be used as the second network interface.

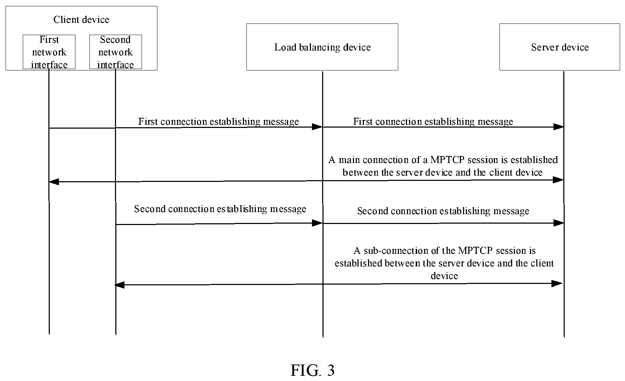

A specific flow of the load balancing method according to the embodiment is shown in FIG. 2. Moreover, please further refer to FIG. 3, which is an interactive diagram of establishing a MPTCP connection based on the load balancing method of the embodiment.

In step 101, in response to a first connection establishing message, a first token information of the main connection is generated according to the first connection establishing message. Herein, the first connection establishing message is configured to establish the main connection of the MPTCP session and is sent by a client device via a first network interface.

Specifically, by taking any client device that initiates an MPTCP connection request to the server device as an example, the client device selects the first network interface to enable the main connection for establishing the MPTCP session with the server device, and sends the first connection establishing message for establishing the main connection of the MPTCP session to a load balancing device via the first network interface. The load balancing device generates the first token information of the main connection according to the first connection establishing message after receiving the first connection establishing message sent by the client device. The first token information serves as token information of the server device receiving the first connection establishing message.

In step 102, the first connection establishing message is sent to the server device, and a corresponding relation between the first token information and the server device receiving the first connection establishing message is added into a preset first connection forwarding table.

Specifically, for each first connection establishing message received, the load balancing device selects one server device for providing services to the main connection of the MPTCP session according to a pre-configured load balancing algorithm, such as a polling method, a random sending method, a source address hash method, etc., and then sends the first connection establishing message to the selected server device to enable the server device to establish the main connection with the client device. The first connection forwarding table is also pre-established in the load balancing device. After sending the first connection establishing message to the selected server device, the load balancing device establishes a corresponding relation between the first token information of the main connection corresponding to the first connection establishing message and the server device providing services for the main connection, and stores the corresponding relation in the first connection forwarding table.

Through the above-mentioned process, when each client device establishes the main connection of the MPTCP session with the server device, the corresponding relation between the first token information of the main connection and the server device providing services for the main connection can be added into the first connection forwarding table.

In step 103, in response to a second connection establishing message, and according to a second token information in the second connection establishing message and the first connection forwarding table, the second connection establishing message is sent to the server device corresponding to the second token information. Herein, the second connection establishing message is configured to establish a sub-connection of the MPTCP session, and is sent by the client device via a second network interface, and the second token information is the token information of the main connection to which the sub-connection belongs.

Specifically, for each client device, after establishing the main connection with the server device via the first network interface and performing normal data transmission, the client device may establish the sub-connection of the MPTCP session with the server device via the second network interface. Specifically, the client device sends the second connection establishing message for establishing the sub-connection of the MPTCP session via the second network interface to the load balancing device, and the second connection establishing message includes the token information of the main connection of the MPTCP session, i.e., the second token information. Because the corresponding relation between the token information of the main connection of the MPTCP session and the server device providing services for the main connection is already added into the first connection forwarding table when establishing the main connection of the MPTCP session, the server device corresponding to the second token information may be obtained from the first connection forwarding table by query, and then the second connection establishing message is sent to the server device corresponding to the second token information. The server device is also the server device providing services for the main connection of the MPTCP session, so that the client device can establish the sub-connection of the MPTCP session with the server device.

The load balancing device in the embodiment can send the connection establishing message of the main connection and the connection establishing message of the sub-connection belonging to the MPTCP session of the same client to the same server device, so that the MPTCP connection access is successfully established.

Comparing with the existing technology, in the embodiment, the load balancing device generates the first token information of the main connection according to the first connection establishing message after receiving the first connection establishing message that is configured to establish the main connection of the MPTCP session and is sent by the client device via the first network interface, and adds the corresponding relation between the first token information and the server device receiving the first connection establishing message into the preset first connection forwarding table, i.e., records the corresponding relation between the first token information of the main connection and the server device providing services for the main connection when forwarding the first connection establishing message to the server device. After receiving the second connection establishing message that is configured to establish the sub-connection of the MPTCP session and is sent by the client device via the second network interface, the load balancing device may obtain the server device corresponding to the second token information in the second connection establishing message by querying the first connection forwarding table, and the second token information is the token information of the main connection of the MPTCP session to which the sub-connection belongs. In this way, the connection establishing message of the main connection and the connection establishing message of the sub-connection belonging to the same MPTCP session may be sent to the same server device, so that the MPTCP connection access is successfully established. Therefore, based on performing load balancing, the effectiveness of the MPTCP mechanism is ensured, thereby implementing load balancing based on the MPTCP protocol. Moreover, compared with the case that the client device establishes the MPTCP connection with the server device when there is no load balancing device, changes to the client device are not necessary.

A second embodiment of the present disclosure relates to a load balancing method. Compared with the first embodiment, the embodiment mainly differs in that: providing a concrete implementation manner for establishing a MPTCP connection between a client device and a server device.

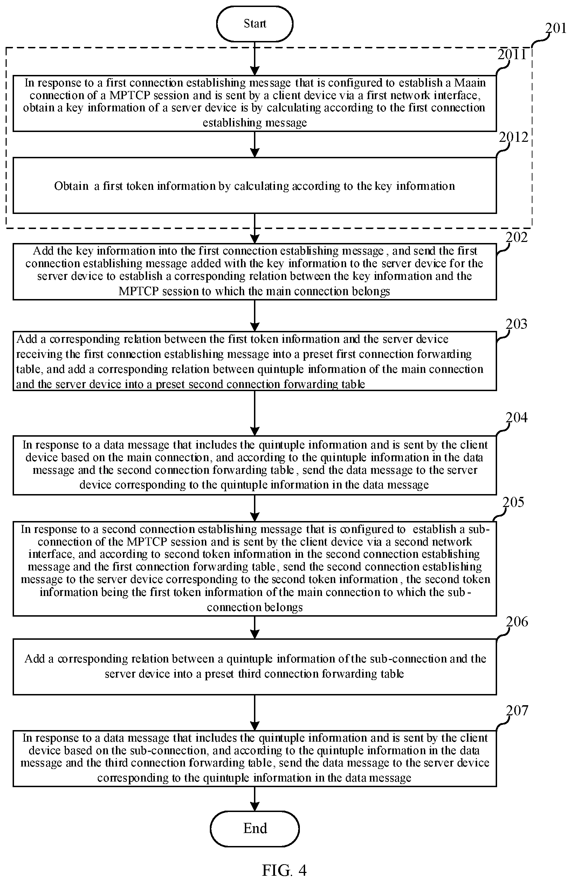

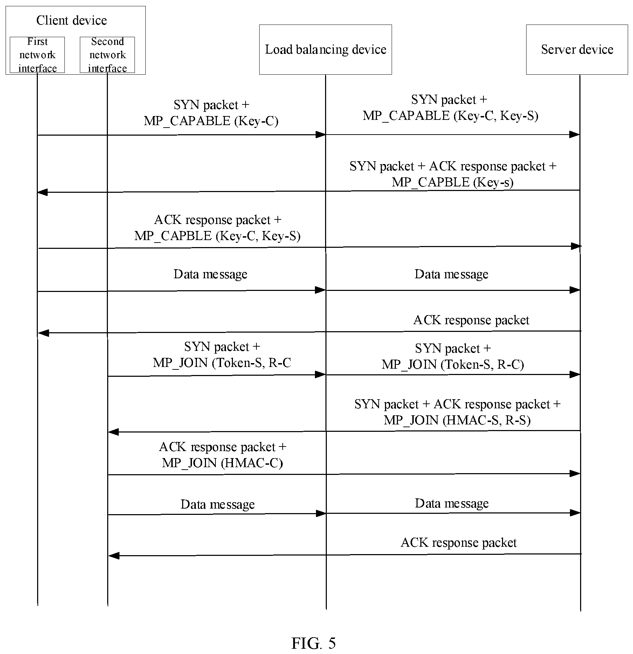

A specific flow of the load balancing method according to the embodiment is shown in FIG. 4. Moreover, please further refer to FIG. 5, which is an interactive diagram of establishing a MPTCP connection based on the load balancing method of the embodiment.

The step 201 includes the following sub-steps:
In sub-step 2011, in response to a first connection establishing message that is configured to establish a main connection of a MPTCP session and is sent by the client device via a first network interface, key information of the server device is obtained by calculating according to the first connection establishing message.
In sub-step 2012, a first token information is obtained by calculating according to the key information.

Specifically, by taking any client device that initiates an MPTCP connection request to the server device as an example, the client device selects the first network interface to enable a main connection for establishing the MPTCP session with the server device, and sends the first connection establishing message for establishing the main connection of the MPTCP session to a load balancing device via the first network interface. The first connection establishing message includes a SYN packet and an MP_CAPABLE field of a TCP option. The MP_CAPABLE field indicates that the client device supports the MPTCP protocol. The SYN packet includes a quintuple information of the main connection of the MPTCP session, and the MP_CAPABLE field includes key information Key-C of the client device. After receiving the first connection establishing message, the load balancing device obtains a key information Key-S of the server device by calculating according to relevant quaternary information (source IP, source port, destination IP, destination port) in the SYN packet and a sequence number of the SYN packet and according to a preset MPTCP protocol calculation manner, and then obtains token information of the main connection, i.e., the first token information (token-S) by calculating according to the key information Key-S and according to a preset hash algorithm (e.g., SHA1 algorithm).

In step 202, the key information is added into the first connection establishing message, and the first connection establishing message added with the key information is sent to the server device, for the server device to establish a corresponding relation between the key information and the MPTCP session to which the main connection belongs.

Specifically, after obtaining the key information Key-S of the server device by calculating, the load balancing device adds the key information Key-S into the first connection establishing message, and then selects one server device to provide services to the main connection of the MPTCP session according to a pre-configured load balancing algorithm, such as a polling method, a random sending method, a source address hash method, etc., and then sends the first connection establishing message added with the key information Key-S of the server device to the selected server device. The server device receiving the first connection establishing message takes the key information Key-S as a key of the server device per se, and establishes a corresponding relation between the key information Key-S and the MPTCP session to which the main connection belongs while establishing the main connection with the client device according to the received first connection establishing message, thus avoiding confusion among multiple MPTCP sessions, herein the MPTCP session may be represented by a struct.

After receiving the first connection establishing message sent by the load balancing device, the server device sends a first response message to the client device according to the quintuple information in the SYN packet in the first connection establishing message. Herein the first response message includes the SYN packet, an ACK response packet and the MP_CAPABLE field of the TCP option. The field of the TCP option indicates that the server device supports the MPTCP protocol. The MP_CAPABLE field includes the key information Key-S of the server device carried in the first connection establishing message.

After receiving the first response message sent by the server device, the client device returns a second response message. Herein the second response message includes an ACK response packet and the MP CAPABLE field of the TCP option, and the MP-CAPABLE field includes the key information Key-C of the client device and the key information Key-S of the server device, indicating that both the client device and the server device support to establish the MPTCP connection. At this time, the client device successfully establishes the main connection of the MPTCP session with the server device via the first network interface.

In step 203, a corresponding relation between the first token information and the server device receiving the first connection establishing message is added into a preset first connection forwarding table, and a corresponding relation between the quintuple information of the main connection and the server device is added into a preset second connection forwarding table.

Specifically, the first connection forwarding table is pre-established in the load balancing device. After sending the first connection establishing message to the selected server device, the load balancing device establishes a corresponding relation between the first token information (token-S) of the main connection that corresponds to the first connection establishing message and the server device providing services to the main connection, and stores the corresponding relation in the first connection forwarding table. The second connection forwarding table is also pre-established in the load balancing device. After sending the first connection establishing message to the selected server device, the load balancing device adds the corresponding relation between the quintuple information of the main connection and the server device providing services to the main connection into the preset second connection forwarding table.

In step 204, in response to a data message that includes the quintuple information and is sent by the client device based on the main connection, and according to the quintuple information in the data message and the second connection forwarding table, the data message is sent to the server device corresponding to the quintuple information in the data message.

Specifically, after the client device and the server device successfully establish the main connection of the MPTCP session, the client device may transmit data with the server device based on the main connection. Specifically, the client device may send the data message including the quintuple information to the load balancing device, the load balancing device may query the second connection forwarding table to obtain the server device corresponding to the quintuple information, and then the load balancing device may send the data message to the server device. After receiving the data message, the server device sends the ACK response packet to the client device.

In step 205, in response to a second connection establishing message that is configured to establish a sub-connection of the MPTCP session and is sent by the client device via a second network interface, and according to a second token information in the second connection establishing message and the first connection forwarding table, the second connection establishing message is sent to the server device corresponding to the second token information. Herein, the second token information is the first token information of the main connection to which the sub-connection belongs.

Specifically, the MP CAPABLE field in the first response message sent by the server device to the client device includes the key information Key-S of the server device carried in the first connection establishing message. The client device may obtain the token information of the main connection, i.e. the second token information(token-S), by calculating according to the key information Key-S and according to the same hash algorithm (e.g., SHA1 algorithm) as in the load balancing device, and may add the second token information (token-S) into the second connection establishing message that is configured to establish the sub-connection of the MPTCP session and is sent to the load balancing device via the second network interface, so as to inform the server device of the main connection of the MPTCP session to which the sub-connection belongs, so that the server device can establish a new sub-connection on the main connection. The second connection establishing message includes a SYN packet, and a MP JOIN field of the TCP option. The MP_JOIN field includes the second token information (token-S), and the MP_JOIN field is used to indicate that the client device supports the MPTCP connection. In one example, the second connection establishing message further includes a random number (R-C).

After the load balancing device receives the second connection establishing message above, because the corresponding relation between the first token information of the main connection of the MPTCP session and the server device providing services to the main connection is already added into the first connection forwarding table when establishing the main connection of the MPTCP session, the server device corresponding to the second token information (token-S) can be obtained from the first connection forwarding table by query, and then the second connection establishing message is forwarded to the server device corresponding to the second token information (token-S). The server device is also the server device providing services to the main connection of the MPTCP session, so that the client device can establish the sub-connection of the MPTCP session with the server device.

After receiving the second connection establishing message forwarded by the load balancing device, the server device may establish the sub-connection of the MPTCP session with the client device. A specific process is as follows: after receiving the above-mentioned second connection establishing message forwarded by the load balancing device, the server device may return a third response message to the client device according to the quintuple information in the SYN packet in the second connection establishing message. Herein the third response message includes a SYN packet, an ACK response packet and the MP JOIN field of the TCP option. The MP_JOIN field includes authentication information (HMAC-S) of the server device and a random number (R-S) generated by the server device, so that the client device may verify whether the server device has the same key information Key-C of the client device and the key information Key-S of the server device as the client device has. A specific calculation formula of the authentication information HMAC-S is as follows: HMAC-S=HMAC (Key=(Key-S)+(Key-C), Msg=(R-S)+(R-C)), herein HMAC is a hash algorithm based on a random number, Key takes the key information Key-S as a high order part and takes the key information Key-C as a low order part, while the message Msg takes the random number (R-S) as a high order part and takes the random number (R-C) as a low order part.

After receiving the third response message sent by the server device, the client device may return a fourth response message to the server device. The fourth response message includes: an ACK response packet and the MP_JOIN field of the TCP option, and the MP_JOIN field includes authentication information (HMAC-C) of the client device. A specific calculation formula of the authentication information HMAC-C is as follows: HMAC-C=HMAC (Key=(Key-C)+(Key-S), Msg=(R-C)+ (R-S)), herein HMAC is a hash algorithm based on a random number, Key takes the key information Key-C as a high order part and takes the key information Key-S as a low order part, while the message Msg takes the random number (R-C) as a high order part and takes the random number (R-S) as a low order part.

After receiving the fourth response message, the server device returns an ACK response packet, indicating confirmation of the fourth response message from the client device. The server device completes handshaking for four times with the client device, and establishes a new sub-connection on the main connection of the MPTCP session, and the sub-connection of the MPTCP session is successfully established.

In step 206, a corresponding relation between a quintuple information of the sub-connection and the server device is added into a preset third connection forwarding table.

Specifically, the third connection forwarding table is pre-established in the load balancing device. After sending the second connection establishing message to the server device corresponding to the second token information, the load balancing device adds the corresponding relation between the quintuple information of the sub-connection and the server device providing services to the sub-connection into the preset second connection forwarding table.

In step 207, in response to a data message that includes the quintuple information and is sent by the client device based on the sub-connection, and according to the quintuple information in the data message and the third connection forwarding table, the data message is sent to the server device corresponding to the quintuple information in the data message.

Specifically, after the client device successfully establishes the sub-connection of the MPTCP session with the server device, the client device may transmit data with the server device based on the sub-connection. Specifically, the client device may send the data message including the quintuple information to the load balancing device, and the load balancing device may query the third connection forwarding table to obtain the server device corresponding to the quintuple information in the data message. Since the main connection and the sub-connection of the MPTCP session with the client device are established by the same server device, the quintuple information of the sub-connection and the quintuple information of the main connection are also corresponding to the same server device. Thus the load balancing device can send the data message to the corresponding server device, and the server device can send the ACK response packet to the client device after receiving the data message.

In comparison to the first embodiment, the embodiment provides a concrete implementation manner of establishing the MPTCP connection between the client device and the server device.

A third embodiment of the present disclosure relates to a load balancing device applied to a load balancing system. In the embodiment, the load balancing device includes at least one processor; and a memory communicated with the at least one processor.

The memory stores an instruction executable by the at least one processor, and the instruction is executed by the at least one processor to cause the at least one processor to implement the load balancing method according to the first or second embodiment.

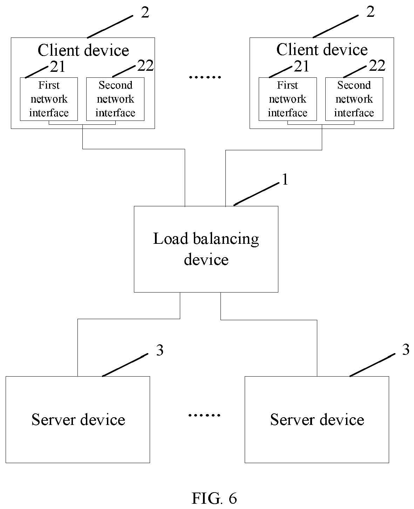

A fourth embodiment of the present disclosure relates to a load balancing system. With reference to FIG. 6, the load balancing system includes: a load balancing device 1, at least one client device 2 and at least one server device 3 that are mutually connected. For example, the client device 2 may be a mobile phone, a tablet, or the like, and the server device 3 may be a server. The client device 2 may include multiple network interfaces. The network interface, for instance, may be a 4G network interface, a WIFI network interface, etc. The multiple network interfaces include a first network interface 21 and at least one second network interface 22 (one second network interface is taken as an example in the figure). For example, if the client device includes a 4G network interface and a WIFI network interface, the 4G network interface may be used as the first network interface 21 and the WIFI network interface may be used as the second network interface 22.

With reference to FIG. 6, the client device 2 is configured to send a first connection establishing message for establishing a main connection of a MPTCP session via the first network interface 21 to the load balancing device 1; and the load balancing device 1 is configured to obtain a first token information of the main connection according to the first connection establishing message, send the first connection establishing message to the server device 3, and add a corresponding relation between the first token information and the server device 3 into a preset first connection forwarding table.

The client device 2 is further configured to send a second connection establishing message for establishing a sub-connection of the MPTCP session via the second network interface 22 to the load balancing device 1. The second connection establishing message includes a second token information, and the second token information is the token information of the main connection to which the sub-connection belongs. The load balancing device 1 is further configured to send the second connection establishing message to the server device corresponding to the second token information according to the second token information and the first connection forwarding table.

The following will be described in detail with a client device A as an example, and the details are as follows. When establishing a main connection of a MPTCP session, the client device A sends a first connection establishing message for establishing the main connection of the MPTCP session to the load balancing device 1 via the first network interface 21. The load balancing device 1 generates a first token information (token-S) of the main connection according to the first connection establishing message after receiving the first connection establishing message sent by the client device A, and selects one server device (recorded as server device B) for providing services to the main connection of the MPTCP session according to a pre-configured load balancing algorithm. The first token information (token-S) is token information of the server device B. When sending the first connection establishing message to the server device B, the load balancing device 1 establishes a corresponding relation between the first token information (token-S) and the server device B, and stores the corresponding relation in a preset first connection forwarding table. After receiving the first connection establishing message, the server device B can establish the main connection of the MPTCP session with the client device A.

After establishing the main connection of the MPTCP session with the server device B, the client device A sends a second connection establishing message for establishing a sub-connection of the MPTCP session to the load balancing device 1 via the second network interface 22. Herein the second connection establishing message includes token information of the main connection of the MPTCP session, i.e., second token information, which is the token information (token-S) of the server device B. After receiving the second connection establishing message sent by the client device A, the load balancing device 1 may obtain that the server device corresponding to the token information (token-S) is the server device B according to the token information (token-S) in the second connection establishing message by querying the first connection forwarding table, and may send the second connection establishing message to the server device B. After receiving the second connection establishing message, the server device B can establish a new sub-connection on the main connection of the MPTCP session.

Since the first embodiment and the embodiment correspond to each other, the embodiment can be implemented cooperatively with the first embodiment. The technical details mentioned in the first embodiment are still effective in the embodiment, and the technical effects that can be achieved in the first embodiment can also be achieved in the embodiment. To reduce repetition, details will not be elaborated herein. Accordingly, related technical details mentioned in the embodiment can also be applied into the first embodiment.

Comparing with the prior art, in the embodiment, the load balancing device generates the first token information of the main connection according to the first connection establishing message after receiving the first connection establishing message that is configured to establish the main connection of the MPTCP session and is sent by the client device via the first network interface, and adds the corresponding relation between the first token information and the server device receiving the first connection establishing message into the preset first connection forwarding table, i.e., records the corresponding relation between the token information of the main connection and the server device providing services to the main connection when forwarding the first connection establishing message to the server device; after receiving the second connection establishing message that is configured to establish the sub-connection of the MPTCP session and is sent by the client device via the second network interface, the load balancing device may obtain the server device corresponding to the second token information in the second connection establishing message by querying the first connection forwarding table, the second token information being the token information of the main connection of the MPTCP session to which the sub-connection belongs. In this way, the connection establishing message of the main connection and the connection establishing message of the sub-connection belonging to the same MPTCP session may be sent to the same server device, so that the MPTCP connection access is successfully established. Therefore, based on performing load balancing, the effectiveness of the MPTCP mechanism is ensured, thereby implementing load balancing based on the MPTCP protocol. Moreover, compared with the case that the client device establishes the MPTCP connection with the server device when there is no load balancing device, changes to the client device are not necessary.

A fifth embodiment of the present disclosure relates to a load balancing system. Compared with the fourth embodiment, the embodiment mainly differs in that: providing a concrete implementation manner for establishing the MPTCP connection between the client device and the server device.

The load balancing device 1 is configured to obtain key information of the server device 3 by calculating according to the first connection establishing message; and obtain the first token information by calculating according to the key information. The first connection establishing message includes a quintuple information of the main connection, and the load balancing device 1 is configured to obtain the key information of the server device 3 by calculating according to the quintuple information of the main connection.

The load balancing device 1 is configured to add the key information into the first connection establishing message and send the first connection establishing message added with the key information to the server device 3.

The server device 3 is configured to establish a corresponding relation between the key information and the MPTCP session to which the main connection belongs.

The first connection establishing message includes the quintuple information of the main connection, and the load balancing system 1 is further configured to add a corresponding relation between the quintuple information of the main connection and the server device 3 into a preset second connection forwarding table after sending the first connection establishing message to the server device 3.

The load balancing device 1 is further configured to, in response to a data message including the quintuple information sent by the client device 2 based on the main connection, and according to the quintuple information in the data message and the second connection forwarding table, send the data message to the server device 3 corresponding to the quintuple information in the data message.

A second connection establishing message includes a quintuple information of the sub-connection, and the load balancing device 1 is further configured to, after sending the second connection establishing message to the server device 3 corresponding to a second token information according to the second token information in the second connection establishing message and the first connection forwarding table, add a corresponding relation between the quintuple information of the sub-connection and the server device 3 in a preset third connection forwarding table.

The load balancing device 1 is further configured to, in response to a data message including the quintuple information sent by the client device 2 based on the sub-connection, and according to the quintuple information in the data message and the third connection forwarding table, send the data message to the server device 3 corresponding to the quintuple information in the data message.

In one example, the server device 3 is configured to, after receiving the first connection establishing message including the key information, send a response message including the key information to the client device 2.

The client device 2 is configured to obtain the second token information by calculating according to the key information of the server device 3.

Since the second embodiment and the embodiment correspond to each other, the embodiment can be implemented cooperatively with the second embodiment. The technical details mentioned in the second embodiment are still effective in the embodiment, and the technical effects that can be achieved in the second embodiment can also be achieved in the embodiment. To reduce repetition, details will not be elaborated herein. Accordingly, related technical details mentioned in the embodiment can also be applied into the second embodiment.

In comparison to the fourth embodiment, the embodiment provides a concrete implementation manner of establishing the MPTCP connection between the client device and the server device.

Those of ordinary skills in the art can understand that the above embodiments are specific embodiments for implementing the present disclosure, while in practical applications, various changes in form and detail can be made to the embodiments without departing from the spirit and scope of the present disclosure.

## Claims

1. A load balancing method applied to a load balancing device, comprising:
in response to a first connection establishing message, generating a first token information of a main connection of a MPTCP session according to the first connection establishing message; wherein the first connection establishing message is configured to establish the main connection of the MPTCP session and is sent by a client device to the load balancing device via a first network interface;
sending the first connection establishing message to a server device, and adding a corresponding relation between the first token information and the server device receiving the first connection establishing message into a preset first connection forwarding table; and
in response to a second connection establishing message, and according to a second token information in the second connection establishing message and the first connection forwarding table, sending the second connection establishing message to the server device corresponding to the second token information; wherein the second connection establishing message is configured to establish a sub-connection of the MPTCP session and is sent by the client device to the load balancing device via a second network interface and the second token information is the first token information of the main connection to which the sub-connection belongs.

2. The load balancing method according to claim 1, wherein generating the first token information of the main connection according to the first connection establishing message comprises:
obtaining a key information of the server device by calculating according to the first connection establishing message; and
obtaining the first token information by calculating according to the key information.

3. The load balancing method according to claim 2, wherein sending the first connection establishing message to the server device comprises:
adding the key information into the first connection establishing message, and sending the first connection establishing message added with the key information to the server device for the server device to establish a corresponding relation between the key information and the MPTCP session to which the main connection belongs.

4. The load balancing method according to claim 1, wherein the first connection establishing message comprises a quintuple information of the main connection, and after sending the first connection establishing message to the server device, the method further comprises:
adding a corresponding relation between the quintuple information of the main connection and the server device into a preset second connection forwarding table; and
the method further comprises:
in response to a data message including the quintuple information of the main connection, and according to the quintuple information in the data message and the second connection forwarding table, sending the data message to the server device corresponding to the quintuple information of the main connection in the data message; wherein the data message is sent by the client device based on the main connection.

5. The load balancing method according to claim 1, wherein the second connection establishing message comprises a quintuple information of the sub-connection, and after sending the second connection establishing message to the server device corresponding to the second token information according to the second token information in the second connection establishing message and the first connection forwarding table, the method further comprises:
adding a corresponding relation between the quintuple information of the sub-connection and the server device into a preset third connection forwarding table; and
the method further comprises:
in response to a data message including the quintuple information of the sub-connection, and according to the quintuple information in the data message and the third connection forwarding table, sending the data message to the server device corresponding to the quintuple information of the sub-connection in the data message; wherein the data message is sent by the client device based on the sub-connection.

6. The load balancing method according to claim 2, wherein the first connection establishing message comprises a quintuple information of the main connection; and obtaining the key information by calculating according to the first connection establishing message comprises:
obtaining the key information by calculating according to the quintuple information of the main connection.

7. A load balancing device, comprising: at least one processor; and, a memory communicated with the at least one processor,
wherein, the memory stores an instruction executable by the at least one processor, and the instruction is executed by the at least one processor to cause the at least one processor to implement the load balancing method according to any one of claims 1 to 6.

8. A load balancing system, comprising: a load balancing device, at least one client device and at least one server device that are mutually connected, wherein:
the client device is configured to send a first connection establishing message to the load balancing device via a first network interface; wherein the first connection establishing message is configured to establish a main connection of a MPTCP session;
the load balancing device is configured to obtain a first token information of the main connection according to the first connection establishing message;
the load balancing device is further configured to send the first connection establishing message to the server device, and add a corresponding relation between the first token information and the server device into a preset first connection forwarding table;
the client device is further configured to send a second connection establishing message to the load balancing device via a second network interface; wherein the second connection establishing message is configured to establish a sub-connection of the MPTCP session, the second connection establishing message comprises a second token information, and the second token information is the first token information of the main connection to which the sub-connection belongs; and
the load balancing device is further configured to send the second connection establishing message to the server device corresponding to the second token information according to the second token information and the first connection forwarding table.

9. The load balancing system according to claim 8, wherein the load balancing device is configured to obtain a key information of the server device by calculating according to the first connection establishing message; and
the load balancing device is configured to obtain the first token information by calculating according to the key information.

10. The load balancing system according to claim 9, wherein the load balancing device is configured to add the key information into the first connection establishing message and send the first connection establishing message added with the key information to the server device; and
the server device is configured to establish a corresponding relation between the key information and the MPTCP session to which the main connection belongs.

11. The load balancing system according to claim 8, wherein the first connection establishing message comprises a quintuple information of the main connection, and the load balancing device is further configured to add a corresponding relation between the quintuple information of the main connection and the server device into a preset second connection forwarding table after sending the first connection establishing message to the server device; and
the load balancing device is further configured to, in response to a data message including the quintuple information of the main connection, and according to the quintuple information of the main connection in the data message and the second connection forwarding table, send the data message to the server device corresponding to the quintuple information of the main connection in the data message; wherein the data message is sent by the client device to the load balancing device based on the main connection.

12. The load balancing system according to claim 8, wherein the second connection establishing message comprises a quintuple information of the sub-connection, and the load balancing device is further configured to, after sending the second connection establishing message to the server device corresponding to the second token information according to the second token information in the second connection establishing message and the first connection forwarding table, add a corresponding relation between the quintuple information of the sub-connection and the server device in a preset third connection forwarding table; and
the load balancing device is further configured to, in response to a data message including the quintuple information of the sub-connection, and according to the quintuple information of the sub-connection in the data message and the third connection forwarding table, send the data message to the server device corresponding to the quintuple information of the sub-connection in the data message; wherein the data message is sent by the client device to the load balancing device based on the sub-connection.

13. The load balancing system according to claim 10, wherein the server device is configured to, after receiving the first connection establishing message including the key information, send a response message including the key information to the client device; and
the client device is configured to obtain the second token information by calculating according to the key information.

14. The load balancing system according to claim 9, wherein the first connection establishing message comprises a quintuple information of the main connection; and the load balancing device is configured to obtain the key information by calculating according to the quintuple information of the main connection.
